Europäisches Patentamt

European Patent Office

Office européen des brevets

(19)

(11) Veröffentlichungsnummer : **0 059 252**
B1

# (12) EUROPÄISCHE PATENTSCHRIFT

(45) Veröffentlichungstag der Patentschrift :
06.05.87

(21) Anmeldenummer : 81109125.5

(22) Anmeldetag : 28.10.81

(51) Int. Cl.⁴ : **B 25 C  5/02,** F 24 D  19/00,
F 16 L  55/00, F 16 B  15/00

(54) Verfahren und Vorrichtung zum Befestigen von Rohren.

(30) Priorität : 27.02.81 DE 3107608

(43) Veröffentlichungstag der Anmeldung :
08.09.82 Patentblatt 82/36

(45) Bekanntmachung des Hinweises auf die Patenterteilung : 06.05.87 Patentblatt 87/19

(84) Benannte Vertragsstaaten :
BE CH FR LI LU NL

(56) Entgegenhaltungen :
DE-A- 2 449 568
DE-A- 2 850 276
DE-A- 2 940 261
DE-B- 2 849 805
US-A- 2 087 779

(73) Patentinhaber : Angersbach, Friedhelm
Heinrichstrasse 17
D-4703 Bönen (DE)

(72) Erfinder : Angersbach, Friedhelm
Heinrichstrasse 17
D-4703 Bönen (DE)

(74) Vertreter : Dipl.-Phys.Dr. Manitz Dipl.-Ing., Dipl.-Wirtsch. Finsterwald Dipl.-Chem.Dr. Heyn Dipl.-Phys.
Rotermund Morgan, B.Sc.(Phys)
Robert-Koch-Strasse 1
D-8000 München 22 (DE)

EP 0 059 252 B1

## Beschreibung

Die Erfindung betrifft ein Verfahren zur Befestigung von für eine Fußflächenheizung bestimmten Rohren nach dem Oberbegriff des Patentanspruchs 1 sowie eine Vorrichtung zur Durchführung dieses Verfahrens.

Die Rohre von Fußflächenheizungen müssen bekanntlich entsprechend einem vorgegebenen Verlauf bzw. Muster auf einer Isoliermaterialschicht fixiert werden. Dazu ist es bekannt, bereits im Isoliermaterial nutförmige Ausnehmungen vorzusehen, in die dann die Rohre eingedrückt werden. Diese Lösung ist aufwendig, läßt keinen oder wenig freien Spielraum zur Anpassung des Rohrverlaufs an spezielle örtliche Gegebenheiten und ist ferner mit dem Nachteil behaftet, daß es insbesondere beim Verlegen von Rohren bei relativ niedrigen Temperaturen schwierig ist, die in diesem Falle relativ steifen Kunststoffrohre in den Nuten dauerhaft zu fixieren und ein Herausspringen aus den Nuten zu verhindern.

Desweiteren ist es bekannt, die Rohre auf der jeweiligen Isoliermaterialschicht mittels speziell angebrachten Klemmaufnahmen, die ihrerseits mit der Isoliermaterialschicht verbunden werden, zu fixieren, und es ist auch bereits bekannt, Befestigungsklötze aus Isoliermaterial zu verwenden, die mit der Isoliermaterialschicht verklebt werden und klebflächenseitig eine Ausnehmung zur Rohraufnahme besitzen. All diese Befestigungsarten erfordern einen erheblichen Arbeitsaufwand bei der Rohrverlegung, wobei die Güte der Fixierung der Rohre weitgehend von der Sorgfalt der die Verlegearbeiten durchführenden Person abhängig ist.

Schließlich ist es auch schon bekannt, die Rohre von Fußflächenheizungen auf der beispielsweise aus folienbeschichtetem Styropor bestehenden Isoliermaterialschicht mittels Metallklammern zu fixieren, die den Abmessungen des jeweiligen Rohres angepaßt und derart gekrümmt sind, daß sich nach dem von Hand erfolgenden Einstecken der Klammern in das Isoliermaterial ein gewisser Verhakungseffekt ergibt. Da Isoliermaterialien, wie sie bei Fußflächenheizungen Verwendung finden, nur eine vergleichsweise geringe Dichte aufweisen, bereitet es Schwierigkeiten, mittels derartiger Hakenanordnungen eine einwandfreie Rohrfixierung sicherzustellen.

Aus der US-A-2 087 779 ist ein Klammergerät bekannt, das einen vertikal in einem Schacht verfahrbaren Schieber aufweist, der in einen am unteren Schachtende ausgebildeten Klammeraufnahmeraum verfahrbar ist. Unterhalb des Schachtes ist beabstandet vom Schachtende ein Gegenstück mit zwei Formplatten angeordnet. Diese Formplatten besitzen in ihrer dem Schacht zugewandten Oberfläche jeweils eine Nut.

Wird der Schieber nach unten verfahren, so nimmt er eine im Klammeraufnahmeraum befindliche U-förmige Klammer derart mit, daß die Spitzen ihrer Schenkel in die Nuten der Formplatten eingedrückt und dort unter dem Druck, der auf den Schieber ausgeübt wird, verformt werden.

Bei diesem Klammergerät ist von Nachteil, daß zur wirksamen Verformung der Klammer und damit zum sicheren Zusammenhalt der zu verklammernden Gegenstände, Formplatten notwendig sind. Hierdurch können nur Gegenstände verklammert werden, die zwischen dem Schaft und die Formplatten einbringbar sind. Sollen beispielsweise irgendwelche Gegenstände an eine Wand oder auf einen Fußboden geklammert werden, so ist diese bekannte Vorrichtung nicht einsetzbar.

Aus der DE-OS-2 449 568 ist eine sich selbständig festklemmende Heftklammer bekannt, mit der beispielsweise elektrische Leitungen an Gegenständen befestigt werden sollen. Diese Heftklammer weist eine U-Form auf, bei der die von der U-Basis entfernten Schenkelabschnitte um ihre Längsachse verdreht sind. Diese verdrehten Schenkelabschnitte bewirken eine selbsttätige Festklemmbewegung, wenn die Heftklammer in ein Werkstück getrieben wird. Ein entscheidender Nachteil dieser Heftklammer ist der durch die verdrehten Schenkelabschnitte erforderliche aufwendige Herstellungsprozeß, der die Herstellungskosten von derartigen Heftklammern wesentlich erhöht. Darüberhinaus ist für das wirksame Verbiegen der verdrehten Schenkelabschnitte beim Eintreiben der Heftklammer in das Werkstück eine verhältnismäßig hohe Dichte des Werkstücks notwendig.

Aufgabe der vorliegenden Erfindung ist es, ein Verfahren zu schaffen, das es auf einfache und bequem durchführbare Weise ermöglicht, eine sichere Fixierung von Rohren auch dann zu gewährleisten, wenn die Isoliermaterialschicht, auf der das jeweilige Rohr befestigt werden muß, nur eine vergleichsweise geringe Dichte aufweist. Ferner soll durch die Erfindung eine Vorrichtung zur Durchführung dieses Verfahrens geschaffen werden, die sich durch Einfachheit, unproblematische und bequeme Bedienbarkeit auszeichnet und dabei eine sichere Fixierung der Rohre von Fußflächenheizungen gewährleistet.

Gelöst wird der das Verfahren betreffende Teil der gestellten Aufgabe dadurch, daß der Bodenschenkel dieser Klammer deutlich länger als der Durchmesser des zu befestigenden Rohres ist und die Seitenschenkel dieser Klammer in ihrer Länge zumindest im wesentlichen den Rohrdurchmesser nicht überschreiten, mit ihrem Bodenschenkel mittig bezüglich des Rohres angeordnet und dann beidseitig des als Abstützstelle dienenden Rohres der Bodenschenkel in Richtung der Isoliermaterialschicht so weit nach unten gedrückt wird, daß die Seitenschenkel im wesentlichen aufeinander zugerichtet vollständig in die Isoliermaterialschicht gestoßen werden.

Der Grundgedanke des Verfahrens nach der Erfindung besteht demgemäß darin, die Endform der die Rohrfixierung bewirkenden Klammer erst während des Eindrückens der Klammer in die Isoliermaterialschicht herzustellen und damit die Stützwirkung des Rohres auszunutzen, um die notwendige Klammerverformung vornehmen zu können.

Der Bodenschenkel der Klammer wird dabei vorzugsweise so um das Rohr gebogen, daß die in die Isoliermaterialschicht eindringenden Seitenschenkel das Rohr zumindest in einem Teilbereich untergreifen und damit die freien Enden der Seitenschenkel einen gegenseitigen Abstand besitzen, der kleiner als der Rohrdurchmesser ist.

Durch die nach Beendigung des Eindrückvorgangs geschaffene Klammerform wird eine absolut sichere Rohrfixierung gewährleistet, da ein Herausziehen der verformten Klammer aus der Isoliermaterialschicht praktisch nicht mehr möglich ist. Eine gegebenenfalls auf der Isoliermaterialschicht vorgesehene und mit dieser fest verklebte Folienschicht erhöht die Haltekraft noch ganz wesentlich.

Eine vorzugsweise verwendete Vorrichtung zur Durchführung des Verfahrens nach der Erfindung weist einen mit einem zumindest im wesentlichen vertikal zu einer Stützeinheit angeordneten Flachschacht auf, in dem ein bis in den Bereich des offenen, unteren Endes verfahrbarer Schieber geführt und dessen untere Ausstoßbereich als Klammeraufnahme und Klammerführung ausgebildet ist, und zeichnet sich dadurch aus, daß der Flachschacht im Ausstoßbereich eine mittig gelegene, rohrübergreifende Ausnehmung aufweist, daß der Schieber plattenförmig ausgebildet ist und stirnseitig eine mittensymmetrisch gelegene Aussparung mit seitlichen Schrägwänden besitzt und daß die Aussparung mit der Ausnehmung ausgerichtet ist.

Dem Flachschacht ist dabei ein Klammermagazin zugeordnet, das aus einem im wesentlichen senkrecht zum Flachschacht verlaufenden und im Ausstoßbereich des Flachschachts mündenden Klammer-Führungskanal mit einer Klammer-Vorschubeinrichtung besteht.

Mittels einer derartigen Vorrichtung lassen sich die Klammern schnell, exakt und problemfrei in das Isoliermaterial einbringen, wobei die notwendige Verformung des Bodenschenkels der Klammern zwangsläufig und stets in exakt gleicher Weise erfolgt.

Da im Klammermagazin eine Vielzahl von Einzelklammern vorgesehen werden kann und der Nachschub in die Flachkammer automatisch erfolgt, läßt sich bei Verwendung der erfindungsgemäßen Vorrichtung der Rohrverlegevorgang wesentlich beschleunigen, und zwar ohne die Gefahr einer damit verbundenen Verschlechterung der Rohrfixierung.

Der im Flachschacht geführte und die Verformung des Bodenschenkels der Klammer bewirkende Schieber ist vorzugsweise gegen eine Druckfeder mittels einer Betätigungsstange aus seiner Ruhelage in Richtung des offenen Endes des Flachschachtes bewegbar. Die Betätigungsstange kann dabei in ihrer Länge derart bemessen sein, daß die Bedienungsperson die Rohrfixierung in aufrechter Haltung vornehmen kann, was wiederum eine wesentliche Erleichterung im Vergleich zur herkömmlichen Art der Rohrbefestigung darstellt.

In einer bevorzugten Ausbildung schließen die Schrägwände zwischen sich einen Winkel von etwa 90° ein. Die gegenseitige Neigung dieser Schrägwände definiert das Ausmaß der Abwinklung des Bodenschenkels der Klammern, da jede Betätigung des Schiebers diesen über den gleichen Hub bewegt und somit stets gleiche Verhältnisse gewährleistet sind.

Die rohrübergreifende Ausnehmung am unteren Flachschachtende bildet bezüglich des zu befestigenden Rohres eine Zentrieraufnahme. Dadurch muß von der jeweiligen Bedienungsperson nur noch gefordert werden, daß sie die Vorrichtung auf das Rohr aufsetzt und die Betätigungsstange nach unten drückt. Die exakte Zentrierung der Klammern bezüglich des Rohres und damit auch die exakte Abwinklung des Bodenschenkels wird zwangsläufig erreicht.

Als Klammern werden vorzugsweise aus Runddraht gebogene Klammern verwendet, wobei im Regelfall korrosionsgeschützter und/oder mit einer Kunststoffbeschichtung versehener Draht mit einer Stärke von etwa 2 bis 3 mm verwendet wird, da Draht von dieser Stärke einerseits noch in der notwendigen Weise ohne Schwierigkeiten verformt werden kann, andererseits aber auch die notwendige Formstabilität besitzt, die erforderlich ist, um die bei verlegten Rohren auftretenden Kräfte ohne Verformung aufnehmen zu können.

Weitere vorteilhafte Ausgestaltungen der Erfindung sind in den Unteransprüchen angegeben.

Die Erfindung wird im folgenden anhand von Ausführungsbeispielen unter Bezugnahme auf die Zeichnung näher erläutert; in der Zeichnung zeigt:

Figur 1 eine schematische Darstellung zur Erläuterung des Grundprinzips der Erfindung, wobei die Grundform der zur Rohrbefestigung verwendeten Klammer zu sehen ist,

Figur 2 eine der Fig. 1 entsprechende Darstellung nach erfolgter Rohrbefestigung,

Figur 3 eine schematische Seitenansicht einer Ausführungsform einer Vorrichtung zur Rohrbefestigung, und

Figur 4 eine Stirnansicht der Vorrichtung nach Fig. 3.

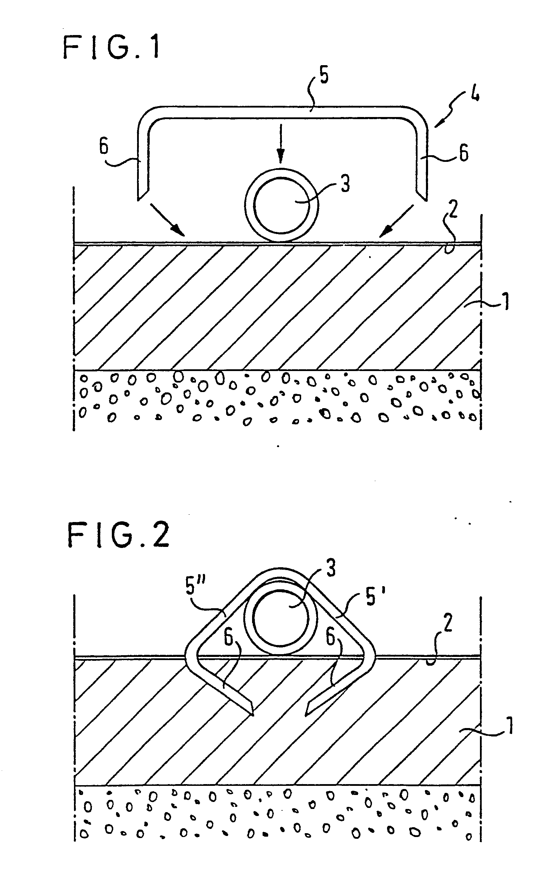

Fig. 1 zeigt eine beispielsweise aus Styropor bestehende Isoliermaterialschicht 1, die deckseitig mit einer vorzugsweise mit einer Aluminiumschicht kaschierten Kunststoffolie 2 versehen ist. Auf dieser Isoliermaterialschicht, die sich über die gesamte Bodenfläche eines mit einer Fußflächenheizung zu versehenden Raumes erstreckt, sind zur Warmwasserführung bestimmte Kunststoffrohre 3 entsprechend einem vorgegebenen Muster zu verlegen, wozu eine exakte Fixierung dieser Rohre 3 bezüglich der Isoliermaterialschicht 1 erforderlich ist.

Diese Fixierung des jeweiligen Rohres oder Rohrabschnittes 3 erfolgt mittels im wesentlichen U-förmiger Klammern 4, die demgemäß einen Bodenschenkel 5 und zwei Seitenschenkel 6 aufweisen.

Die Besonderheit dieser Klammern, die beispielsweise aus einem Kupferdraht mit einem Durchmesser von 3 mm bestehen, ist darin zu sehen, daß der Bodenschenkel 5 wesentlich länger ist als der Durchmesser des Rohres 3 und daß die Länge der Seitenschenkel 6 zumindest im wesentlichen dem Durchmesser des Rohres 3 entspricht.

Diese Befestigungsklammer 4 wird zum Zwecke der Rohrfixierung mittig auf das Rohr 3 aufgesetzt, worauf durch Ausübung entsprechender seitlicher Druckkräfte der Bodenschenkel 5 — wie dies in Fig. 2 zu sehen ist — um das Rohr 3 gebogen wird.

Während des Vorgangs des Abwinkelns des Bodenschenkels 5 werden die Seitenschenkel 6 der Klammer schräg in die Isoliermaterialschicht 1 gestoßen, wodurch sich die angestrebte sichere Verankerung der Klammer in der Isoliermaterialschicht ergibt.

Zu beachten ist dabei, daß lediglich der Bodenschenkel 5 verformt wird, so daß sich praktisch zwei das Rohr 3 zwischen sich einschließende Teilschenkel 5', 5" ergeben, während die Relativlage, bzw. der Winkel der Seitenschenkel 6 zu den Bodenschenkelabschnitten 5', 5" nicht verändert wird.

Die Seitenschenkel 6 sind lediglich vorzugsweise bezüglich des Bodenschenkels 5 etwas nach innen geneigt. Eine Notwendigkeit dazu besteht jedoch nicht, da der aus Fig. 2 ersichtliche Verklammerungseffekt auch erzielt wird, wenn zwischen Seitenschenkeln und Bodenschenkel im wesentlichen ein Winkel von 90° vorgesehen ist.

Die Abwinklung des Bodenschenkels 5 wird bevorzugt so weit getrieben, daß nach erfolgtem Einbringen der Klammer in die Isoliermaterialschicht der gegenseitige Abstand der freien Enden der Seitenschenkel 6 kleiner ist als der Durchmesser des Rohres 3.

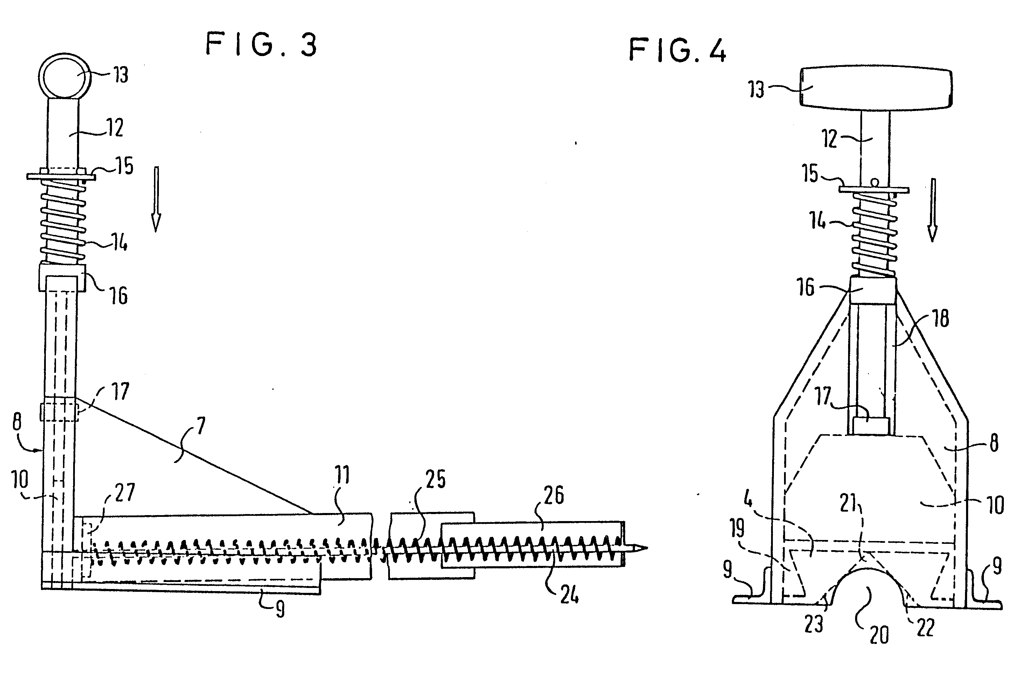

Die Figuren 3 und 4 zeigen eine bevorzugte Ausführungsform einer Vorrichtung zur Durchführung des Verfahrens nach der Erfindung, das heißt eine Vorrichtung zum Fixieren von Rohren mittels während des Fixiervorganges verformten Klammern.

Diese Vorrichtung besteht aus einem zumindest im wesentlichen vertikal zu einer Stützeinheit 7 angeordneten Flachschacht 8, wobei die Stützeinheit 7 so ausgebildet ist, daß sie unter Übergreifen des zu befestigenden Rohres auf die Isoliermaterialschicht mit einer ausreichend großen Auflagefläche aufsetzbar ist.

In dem Flachschacht 8 ist ein bis in den Bereich des offenen unteren Endes dieses Flachschachtes verfahrbarer Schieber 10 angeordnet. Dieser Schieber 10 ist mit einer Betätigungsstange 12 verbunden, die in einer geeigneten Ausnehmung 18 des Flachschachtes sowie in einer mit dem Flachschacht verbundenen Hülse 16 geführt ist und gegen die Kraft einer zwischen der Hülse 16 und einem an der Betätigungsstange 12 vorgesehenen Anschlag 15 in Pfeilrichtung bewegbar ist. Die Betätigungsstange ist an ihrem freien Ende mit einem geeigneten Handgriff 13 versehen und kann in ihrer Länge so dimensioniert sein, daß eine Betätigung der Vorrichtung bei aufrechter Haltung der Bedienungsperson möglich ist.

Die Bewegung der Betätigungsstange in Pfeilrichtung und damit die Bewegung des Schiebers 10 ist durch einen Anschlag 17 begrenzt, wobei dieser Anschlag so gewählt ist, daß bei Erreichen dieser Anschlagposition das untere freie Ende des Schiebers 10 im wesentlichen bündig mit den Stützflächen 9 ist.

Dem Flachschacht 8 zugeordnet its ein Klammermagazin 11, aus dem die U-förmig vorgebogenen Klammern kontinuierlich dem Ausstoßbereich 19 des Flachschachtes zugeführt werden. Dieser Ausstoßbereich 19 ist in seinen Breiten- und Höhenabmessungen im wesentlichen der Klammerform angepaßt und nimmt jeweils nur eine einzige Klammer auf, die dann bei Betätigung des Schiebers 10 unter gleichzeitiger Verformung des Bodenschenkels um das jeweilige Rohr ausgestoßen werden kann.

Das Klammermagazin 11 verläuft im wesentlichen senkrecht zum Flachschacht und ist mit einer Klammer-Vorschubeinrichtung ausgerüstet, die aus einer Vorschubplatte 27 besteht, welche auf einer flachschachtseitig schwenkbar gelagerten Stange 24 geführt ist und mittels einer Feder 25 in Richtung des Flachschachtes vorgespannt wird. Diese auf der Stange 24 angeordnete Feder 25 erstreckt sich somit zwischen der Vorschubplatte 27 und dem Stangenende, wobei das Stangenende in einem Bügel 26 gehaltert ist, der mit dem kanalförmig ausgebildet und wiederum der Klammerform angepaßten Magazin lösbar verbunden ist.

Zweckmäßigerweise ist dieser Bügel 26 als federnder und somit in entsprechende Ausnehmungen der Seitenwandung des U-förmigen Klammer-Führungskanals einhängbarer Bügel ausgebildet. Diese Ausgestaltung gewährleistet ein problemfreies und einfaches Füllen des Klammermagazins.

Die in Fig. 4 deutlich zu erkennende endseitige Ausnehmung 20 des Flachschachtes 8 ist derart ausgebildet, daß sich bei einem Aufsetzen der Vorrichtung auf ein zu fixierendes Rohr zwangsläufig eine mittensymmetrische Ausrichtung ergibt und damit sichergestellt ist, daß die strichliert angedeutete Klammer 4 bei Betätigung des Schiebers 10, der in Fig. 3 und Fig. 4 in der nach unten gedrückten Endstellung zu sehen ist, exakt um die Mitte abgewinkelt wird, so daß sich ein Befestigungsbild gemäß Fig. 2 ergibt.

Die Zur Gewährleistung der exakten Klammerabwinklung erforderliche Aussparung 21 in der Stirnseite des Schiebers 10 ist im dargestellten Beispiel etwa dreieckförmig, so daß sich zwei Schrägwände 22, 23 ergeben, die zwischen sich einen Winkel von etwa 90° einschließen.

Die Form der Aussparung 21 kann jedoch auch in anderer Weise gewählt werden, sofern sichergestellt ist, daß mit vergleichsweise geringem Kraftaufwand der Bodenschenkel der Klammer 4 in der notwendigen Weise um das Rohr gebogen wird.

Die Stützflächen 9 erstrecken sich in Richtung des Klammermagazins 11 nur über einen relativ kleinen Teilbereich, so daß der Einsatz der erfindungsgemäßen Vorrichtung auch im Bereich der Rohrkrümmungen nicht behindert wird.

Bei einer weiteren vorteilhaften Ausführungsform der Erfindung ist ein oberhalb der teilrohrförmigen Aussparung 20 in den Flachschacht einschwenkbares Stützglied vorgesehen, das es ermöglicht, den Bodenschenkel der jeweiligen Klammer 4 während des Abbiegevorganges mittig zu stützen, so daß das Rohr während des Biegens des Schenkels unbelastet bleibt und nicht als Abstützung dienen muß.

Das Einschwenken des Stützgliedes in den Flachschacht und das nach erfolgtem Biegen der jeweiligen Klammer erforderliche Herausschwenken des Stützgliedes aus der Flachkammer erfolgt über ein Gestänge, das über die Betätigungsstange 12 bewegt wird. Dieses Gestänge kann an der Vorderseite des Flachschachtes angelenkt sein, wobei dann bei einem Drücken der Betätigungsstange das Stützglied in den Flachschacht geschwenkt und bei der Rückstellung der Betätigungsstange das Stützglied wieder aus dem Flachschacht herausgeführt wird, so daß die Vorrichtung zur nächsten Fixierungsstelle bewegt werden kann.

Das Stützglied kann in seiner Formgebung der Rohrform angepaßt werden, so daß die jeweilige Klammer entsprechend der Rohrkrümmung gebogen wird, aber es ist auch prinzipiell jede andere geeignete Biegeform denkbar, die eine sichere Rohrfixierung gewährleistet.

**Patentansprüche**

1. Verfahren zur Befestigung von für eine Fußflächenheizung bestimmten Rohren (3) auf einer Isoliermaterialschicht (1) mit Hilfe einer zumindest im wesentlichen U-förmigen Klammer (4), dadurch gekennzeichnet, daß der Bodenschenkel (5) dieser Klammer (4) deutlich länger als der Durchmesser des zu befestigenden Rohres (3) ist und die Seitenschenkel (6) dieser Klammer (4) in ihrer Länge zumindest im wesentlichen den Rohrdurchmesser nicht überschreiten, mit ihrem Bodenschenkel (5) mittig bezüglich des Rohres (3) angeordnet und dann beidseitig des als Abstützstelle dienenden Rohres (3) der Bodenschenkel (5) in Richtung der Isoliermaterialschicht (1) so weit nach unten gedrückt wird, daß die Seitenschenkel (6) im wesentlichen aufeinander zugerichtet vollständig in die Isoliermaterialschicht (1) gestoßen werden.

2. Verfahren nach Anspruch 1, dadurch gekennzeichnet, daß der Bodenschenkel (5) der Klammer (4) so um das Rohr gebogen wird, daß die in die Isoliermaterialschicht (1) eindringenden Seitenschenkel (6) das Rohr (3) zumindest in einem Teilbereich untergreifen.

3. Vorrichtung zur Durchführung des Verfahrens nach einem oder mehreren der vorhergehenden Ansprüche mit einem zumindest im wesentlichen vertikal zu einer Stützeinheit angeordneten Flachschacht (8), in dem ein bis in den Bereich des offenen, unteren Endes verfahrbarer Schieber (10) geführt und dessen unterer Ausstoßbereich als Klammeraufnahme und Klammerführung ausgebildet ist, dadurch gekennzeichnet, daß der Flachschacht (8) im Ausstoßbereich (19) eine mittig gelegene, rohrübergreifende Ausnehmung (20) aufweist, daß der Schieber (10) plattenförmig ausgebildet ist und stirnseitig eine mittensymmetrisch gelegene Aussparung (21) mit seitlichen Schrägwänden (22, 23) besitzt und daß die Aussparung (21) mit der Ausnehmung (20) ausgerichtet ist.

4. Vorrichtung nach Anspruch 3, dadurch gekennzeichnet, daß dem Flachschacht (8) ein Klammermagazin (11) zugeordnet ist, das aus einem im wesentlichen senkrecht zum Flachschacht verlaufenden und im Ausstoßbereich (19) des Flachschachts mündenden Klammer-Führungskanal mit einer Klammer-Vorschubeinrichtung (24, 25, 27) besteht.

5. Vorrichtung nach Anspruch 4, dadurch gekennzeichnet, daß der Klammer-Führungskanal als nach unten offener, den Klammerabmessungen angepaßter Kanal ausgebildet ist und daß die Klammer-Vorschubeinrichtung eine unter Federvorspannung stehende Schubplatte (27) aufweist, die auf einer flachschachtseitig schwenkbar gelagerten Stange (24) geführt ist.

6. Vorrichtung nach Anspruch 5, dadurch gekennzeichnet, daß auf der Führungsstange (24) eine sich von der Schubplatte (27) bis zum freien Ende der Führungsstange (24) erstreckende und dort abgestützte Druckfeder (25) angeordnet ist.

7. Vorrichtung nach Anspruch 6, dadurch gekennzeichnet, daß das freie Ende der Führungsstange (24) in einem lösbar am Klammer-Führungskanal befestigten Bügel (26) gehaltert ist.

8. Vorrichtung nach Anspruch 3, dadurch gekennzeichnet, daß das offene Flachschachtende im wesentlichen bündig zur Stützfläche (9) der Stützeinheit (7) liegt.

9. Vorrichtung nach Anspruch 3, dadurch gekennzeichnet, daß der im Flachschacht (8) geführte Schieber (10) gegen eine Druckfeder (14) mittels einer Betätigungsstange (12) aus seiner Ruhelage in Richtung des offenen Endes des Flachschachts bewegbar ist.

10. Vorrichtung nach Anspruch 9, dadurch gekennzeichnet, daß die Betätigungsstange (12) in einer Längsausnehmung (18) des Flachschachts (8) geführt ist.

11. Vorrichtung nach Anspruch 10, dadurch gekennzeichnet, daß die Endwand der Längsausnehmung (18) einen Anschlag für die Schieberbewegung bildet.

12. Vorrichtung nach einem der vorhergehenden Ansprüche, dadurch gekennzeichnet, daß die Schrägwände (22, 23) zwischen sich einen Winkel im Bereich von etwa 90° einschließen.

13. Vorrichtung nach Anspruch 3, dadurch gekennzeichnet, daß die rohrübergreifende Ausnehmung (20) am unteren Flachschachtende bezüglich des zu befestigenden Rohres (3) eine Zentrieraufnahme bildet.

14. Vorrichtung nach einem oder mehreren der vorhergehenden Ansprüche, dadurch gekennzeichnet, daß die den Klammern (4) angepaßte Flachschachtbreite etwa im Bereich des dreifachen Wertes des Durchmessers des zu befestigenden Rohres (3) liegt.

15. Vorrichtung nach Anspruch 13 oder 14, dadurch gekennzeichnet, daß die den Klammern (4) angepaßte Höhe des Ausstoßbereichs (19) des Flachschachts (8) zumindest im wesentlichen dem Durchmesser des zu befestigenden Rohres (3) entspricht.

16. Vorrichtung nach einem oder mehreren der vorhergehenden Ansprüche, dadurch gekennzeichnet, daß oberhalb der Ausnehmung (20) in den Flachschacht ein Stützglied einschwenkbar ist, das beim Biegen des Bodenschenkels der jeweiligen Klammer die mittige Abstützstelle bildet.

17. Vorrichtung nach Anspruch 16, dadurch gekennzeichnet, daß die Schwenkbewegung des Stützgliedes durch die Betätigungsstange (12) gesteuert ist.

18. Vorrichtung nach Anspruch 17, dadurch gekennzeichnet, daß zwischen Betätigungsstange (12) und Stützglied ein am Gerätegehäuse angelenktes Gestänge vorgesehen ist.

19. Vorrichtung nach einem oder mehreren der vorhergehenden Ansprüche, dadurch gekennzeichnet, daß die Seitenschenkel (6) der Klammern (4) bezüglich des Bodenschenkels (5) leicht nach innen geneigt sind.

20. Vorrichtung nach einem oder mehreren der vorhergehenden Ansprüche, dadurch gekennzeichnet, daß die Klammern (4) aus Runddraht, insbesondere aus korrosionsgeschütztem und/oder kunststoffbeschichtetem Draht mit einer Stärke von etwa 2 bis 3 mm gebogen sind.

**Claims**

1. A method of securing pipes (3) intended for underfloor heating to a layer of insulating material (1) with the aid of an at least substantially U-shaped staple (4), characterized in that the base portion (5) of this staple (4) is substantially longer than the diameter of the pipe (3) to be secured ; in that the side limbs (6) of this staple (4) have a length which is at least not substantially shorter than the pipe diameter and are arranged with the base portion (5) centered with respect to the pipe (3) : and in that the base portion (5) is then pushed downwardly on both sides of the pipe (3), which serves as the support point, in the direction of the layer (1) of insulating material sufficiently far that the side limbs (6) penetrate fully into the layer (1) of insulating material and are substantially directed towards one another.

2. A method in accordance with claim 1, characterized in that the base portion (5) of the staple (4) is so bent around the pipe that the side limbs (6) which penetrate into the layer (1) of insulating material engage at least partly beneath the pipe (3).

3. Apparatus for carrying out the method of one or more of the preceding claims comprising a shallow shaft (8) arranged at least substantially vertically relative to a support unit, with a slider (10) being guided in the shaft and movable into the region of the lower open end, and with the lower ejection region of the shaft being constructed as a staple receiver and staple guide, characterized in that the shallow shaft (8) has, in the ejection region (19), a centrally disposed recess (20) which engages over the pipe ; in that the slider (10) is of plate-like construction and has a centrally symmetrically disposed cut-out (21) at its end face with inclined side walls (22, 23) ; and in that the cut-out (21) is aligned with the recess (20).

4. Apparatus in accordance with claim 3, characterized in that a staple magazine (11) is associated with the shallow shaft (8) and comprises a staple guiding channel which extends substantially perpendicular to the shallow shaft and opens into the ejection region (19) of the shallow shaft, and a staple feed device (24, 25, 27).

5. Apparatus in accordance with claim 4, characterized in that the staple guide channel is constructed as a downwardly open channel matched to the dimensions of the staples ; and in that the staple feed device has as thrust plate (27) which is subjected to spring bias and is guided on a rod (24) which is pivotally mounted at the shallow shaft end.

6. Apparatus in accordance with claim 5, characterized in that a compression spring (24) which extends from the thrust plate (27) up to the free end of the guide rod (24) and which is supported there is arranged on the guide rod (24).

7. Apparatus in accordance with claim 6, characterized in that the free end of the guide rod (24) is mounted in a hoop (26) releasably secured to the staple guide channel.

8. Apparatus in accordance with claim 3, characterized in that the open end of the shaft lies substantially flush with the support surface (9) of the support unit (7).

9. Apparatus in accordance with claim 3, characterized in that the slider (10) guided in the shallow shaft (8) is movable against a compression spring (14) by means of an actuating rod (12) from its rest position in the direction towards the open end of the shallow shaft.

10. Apparatus in accordance with claim 9, characterized in that the actuating rod (12) is guided in an elongate recess (18) of the shallow shaft (8).

11. Apparatus in accordance with claim 10, characterized in that the end wall of the longitudinal recess (18) forms an abutment for the slider movement.

12. Apparatus in accordance with one of the preceding claims, characterized in that the inclined walls (22, 23) enclose between them an angle in the region of approximately 90°.

13. Apparatus in accordance with claim 3, characterized in that the pipe engaging recess (20) at the lower end of the shallow shaft forms a centering recess with respect to the pipe (3) to be secured.

14. Apparatus in accordance with one or more of the preceding claims, characterized in that the width of the shallow shaft which is matched to the staples (4) lies in the range of three times the value of the diameter of the pipe (3) to be secured.

15. Apparatus in accordance with claim 13 or claim 14, characterized in that the height of the ejection region (19) of the shallow shaft (8) is matched to the staples (4) and corresponds at least substantially to the diameter of the pipe (3) to be secured.

16. Apparatus in accordance with one or more of the preceding claims, characterized in that a support member which forms the central support point on bending the base portion of each staple can be swung into the shallow shaft above the recess (20).

17. Apparatus in accordance with claim 16, characterized in that the pivotal movement of the support member is controlled by the actuating rod (12).

18. Apparatus in accordance with claim 17, characterized in that a linkage pivoted to the housing of the apparatus is provided between the actuation rod (12) and the support member.

19. Apparatus in accordance with one or more of the preceding claims, characterized in that the side limbs (6) of the staples (4) are slightly inwardly inclined relative to the base portion (5).

20. Apparatus in accordance with one or more of the preceding claims, characterized in that the staples (4) are bent from round wire, in particular from a corrosion protected and/or plastic coated wire with a thickness of approximately 2 to 3 mm.

**Revendications**

1. Procédé de fixation de tuyaux (3) destinés à un chauffage par le plancher, sur une couche de matière isolante (1) à l'aide d'une attache au moins essentiellement en forme de U, caractérisé en ce que la branche de base (5) de cette attache (4) est nettement plus longue que le diamètre du tuyau (3) à fixer et les branches latérales (6) de cette attache (4) ne dépassent pas au moins essentiellement en longueur le diamètre du tuyau, est disposée par sa branche de base (5) de manière centrée par rapport au tuyau (3) et ensuite de part et d'autre du tuyau (3) servant de point d'appui, la branche de base (5) est repoussée dans la direction de la couche de matière isolante (1), sur une distance telle vers le bas que les branches latérales (6) soient enfoncées complètement dans la couche de matière isolante en étant dirigées essentiellement l'une vers l'autre.

2. Procédé suivant la revendication 1, caractérisé en ce que la branche de base (5) de l'attache (4) est recourbée autour du tuyau de telle sorte que les branches latérales (6) pénétrant dans la couche de matière isolante (1) engagent par dessous le tuyau (3), au moins dans une zone partielle.

3. Dispositif pour la mise en œuvre du procédé suivant une ou plusieurs revendications précédentes, avec un conduit plat (8) disposé au moins essentiellement verticalement par rapport à un élément de soutien, dans lequel est guidé un poussoir (10) pouvant être amené jusqu'au voisinage de l'extrémité inférieure ouverte et dont la zone d'éjection inférieure est réalisée en tant que réceptacle et guide à attache, caractérisé en ce que le conduit plat (8) présente dans la zone d'éjection (19), un évidement (20) situé au centre et chevauchant le tuyau, en ce que le poussoir (10) est réalisé en forme de plaque et possède en bout une découpe (21) située symétriquement, par rapport au milieu, avec des parois latérales obliques (22, 23), et en ce que la découpe (21) est alignée avec l'évidement (20).

4. Dispositif suivant la revendication 3, caractérisé en ce qu'au conduit plat (8) est associé un magasin à attaches (11) qui est constitué par un canal de guidage d'attache s'étendant essentiellement perpendiculairement au conduit plat et débouchant dans la zone d'éjection (19), avec un dispositif d'avance d'attache (24, 25, 27).

5. Dispositif suivant la revendication 4, caractérisé en ce que le canal de guidage d'attache est réalisé en tant que canal ouvert vers le bas, adapté aux dimensions des attaches, et en ce que le dispositif d'avance d'attache présente une plaque de poussée (27) soumise à une précontrainte de ressort, qui est guidée sur une tige (24) supportée à pivotement du côté du conduit plat.

6. Dispositif suivant la revendication 5, caractérisé en ce que sur la tige de guidage (24) est agencé un ressort de pression (25) s'étendant depuis la plaque de poussée (27) jusqu'à l'extrémité libre de la tige de guidage (24) et y étant soutenu.

7. Dispositif suivant la revendication 6, caractérisé en ce que l'extrémité libre de la tige de guidage (24) est maintenue dans un étrier (26) fixé au canal de guidage d'attache.

8. Dispositif suivant la revendication 3, caractérisé en ce que l'extrémité ouverte du conduit plat se situe essentiellement à niveau avec la surface d'appui (9) de l'élément de soutien (7).

9. Dispositif suivant la revendication 3, caractérisé en ce que le poussoir (10) guidé dans le conduit plat (8) peut être déplacé à l'encontre d'un ressort de pression (14), au moyen d'une tige d'actionnement (12), depuis sa position de repos dans la direction de l'extrémité ouverte du conduit plat.

10. Dispositif suivant la revendication 9, caractérisé en ce que la tige d'actionnement (12) est guidée dans un évidement longitudinal (18) du conduit plat (8).

11. Dispositif suivant la revendication 10, caractérisé en ce que la paroi d'extrémité de l'évidement longitudinal (18) forme une butée pour le mouvement du poussoir.

12. Dispositif suivant l'une des revendications précédentes, caractérisé en ce que les parois obliques (22, 23) forment entre elles un angle d'un ordre de grandeur d'environ 90°.

13. Dispositif suivant la revendication 3, caractérisé en ce que l'évidement (20) chevauchant le tuyau sur l'extrémité inférieure du conduit plat, forme un réceptacle de centrage par rapport au tuyau (3) à fixer.

14. Dispositif suivant une ou plusieurs des revendications précédentes, caractérisé en ce que la largeur, adaptée aux attaches (4), du conduit plat se situe approximativement au voisinage de trois fois la valeur du diamètre du tuyau (3) à fixer.

15. Dispositif suivant la revendication 13 ou 14, caractérisé en ce que la hauteur, adaptée aux attaches (4), de la zone d'éjection (19) du conduit plat (8) correspond au moins essentiellement au diamètre du tuyau (3) à fixer.

16. Dispositif suivant une ou plusieurs des revendications précédentes, caractérisé en ce qu'au-dessus de l'évidement (20) dans le conduit plat, un organe d'appui peut être amené par pivotement, pour former le point d'appui médian lors du pliage de la branche de base de l'attache concernée.

17. Dispositif suivant la revendication 16, caractérisé en ce que le mouvement pivotant de l'organe d'appui est commandé par la tige d'actionnement (12).

18. Dispositif suivant la revendication 17 caractérisé en ce qu'entre la tige d'actionnement (12) et l'organe d'appui est prévue une tringlerie articulée sur le boîtier de l'appareil.

19. Dispositif suivant une ou plusieurs des revendications précédentes, caractérisé en ce que les branches latérales (6) des attaches (4) sont légèrement inclinées vers l'intérieur par rapport à la branche de base (5).

20. Dispositif suivant une ou plusieurs des revendications précédentes, caractérisé en ce que les attaches (4) sont pliées à partir de fil métallique rond, en particulier de fil protégé contre la corrosion et/ou revêtu de matière synthétique, avec une épaisseur d'environ 2 à 3 mm.

# FIG.1

# FIG.2

# FIG. 3

# FIG. 4

0 059 252